# EUROPEAN PATENT APPLICATION

(11) **EP 4 083 256 A1**
(43) Date of publication of application: **02.11.2022**
(21) Application number: 20905417.0
(22) Date of filing: 21.12.2020
(51) Int. Cl.: C25B 1/04, C25B 9/00, C25B 15/08, C25B 15/00

(54) **DEVICE AND METHOD FOR PREPARING HIGH-PURITY HYDROGEN AND/OR OXYGEN BY ELECTROLYZING WATER**

(30) Priority: 25.12.2019 CN 201911355604
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: DAY, Eric, Hangzhou, Zhejiang 310012 (CN); WAKIM, Michael, Hangzhou, Zhejiang 310012 (CN); BRIGLIA, Alain, Hangzhou, Zhejiang 310012 (CN)
(74) Representative: Stang, Stefan
(86) International application number: PCT/CN2020/137965
(87) International publication number: WO 2021/129566

(57) **Abstract**

Involved is a device for preparing high-purity hydrogen and/or oxygen by electrolyzing water, comprising an electrolyzer and a degasser for degassing desalted water. The degasser is located at the upstream of the electrolyzer. After desalted water is heated and degassed in the degasser, the content of gaseous impurities, particularly argon, can be reduced to several ppb (weight ratio). The hydrogen and oxygen generated after the desalted and degassed water is electrolyzed in the electrolyzer also contain an extremely small amount of argon, so that the requirements in semiconductor industry are met. Also involved is a method for preparing high-purity hydrogen and/or oxygen by using the device.

## Description

### Technical Field

The present invention belongs to the field of high-purity gas preparation, in particular the preparation of high-purity hydrogen and/or oxygen, and relates to a device and method for producing high-purity hydrogen and oxygen by electrolysis of water.

### Background Art

In industry, there are many methods for the preparation of hydrogen, such as chemical hydrogen production methods including steam methane reforming and methanol reforming, and electrical methods for hydrogen production by electrolysis of water. The basic principle of electrolysis of water to produce hydrogen and oxygen is that water is converted into gaseous hydrogen and oxygen by direct current power. Based on operating temperature, electrolyzers are mainly divided into low-temperature electrolyzers and high-temperature electrolyzers; low-temperature electrolyzers further include alkaline electrolyzers and proton exchange membrane electrolyzers. These have become mature technologies used in commerce.

The semiconductor industry requires large amounts of high-purity gas; here, high-purity means that the impurity content of the required gas is less than a few ppb. Conventional methods for isolating impurities and purifying product gases include adsorption and cryogenic rectification separation under different temperature and pressure conditions. However, the above methods are not very effective at isolating argon in hydrogen and oxygen products.

When a semiconductor factory requires both high-purity oxygen and high-purity hydrogen, electrolyzing water to produce hydrogen and oxygen becomes a particularly suitable method. The impurities which have been the focus of attention in the prior art are mainly various organic substances, salt ions, nitrogen, carbon dioxide, carbon monoxide, hydrocarbons, and water vapour. US 5,484,512 discloses a method and device for providing high-purity oxygen and high-purity hydrogen, including providing pure water to an electrolyzer, passing the generated oxygen and hydrogen through respective purifiers, and further purifying them by cooling, absorption and adsorption, etc. Pure water is prepared by using desalinated water or passing desalinated water through a degassing membrane to remove nitrogen.

### Summary of the Invention

The prior art does not pay attention to the presence of argon as an impurity in the hydrogen and oxygen produced by electrolysis of water, and therefore does not provide distinctive methods or ideas for reducing the content of argon. The hydrogen and oxygen prepared by methods in the prior art generally contain argon in a weight ratio of 70 - 100 ppb. In order to reduce the content of argon in the gas product to less than a few ppb, the present invention discloses a device for preparing high-purity hydrogen and/or oxygen by electrolysis of water, comprising an electrolyzer and a degasser for degassing desalinated water, the degasser being located upstream of the electrolyzer.

Further, the present invention comprises a desalination water treatment system located upstream of the degasser. The electrolyzer of the present invention comprises an alkaline electrolyzer, and the degasser is heated by a hot lye recirculation stream passing through a lye heat exchanger.

In another aspect, the present invention discloses a device for preparing high-purity hydrogen and/or oxygen by electrolysis of water, comprising, connected in sequence, a desalination water treatment system, optionally a desalinated water storage tank, a degasser feed water pump, a desalinated and degassed water heat exchanger, a degasser for degassing desalinated water, an electrolyzer feed water pump and an electrolyzer. The electrolyzer is an alkaline electrolyzer, and comprises an electrolytic cell, an anode lye separator, a cathode lye separator and a lye cooler. The electrolyzer may further comprise a lye heat exchanger, and a hot lye recirculation stream flowing therethrough supplies required heat to the degasser.

In the present invention, the desalinated water has an argon content of less than 10 ppb (by weight proportion) after being degassed by the degasser; the high-purity hydrogen and/or oxygen produced has an argon content of less than 5 ppb (by weight proportion).

In the present invention, O₂ generated by the cathode of the electrolyzer and H₂ generated by the anode can be further purified.

In another aspect, the present invention discloses a method for preparing high-purity hydrogen and/or oxygen by electrolysis of water, comprising a step of degassing desalinated water in a degasser, to obtain electrolyzer feed water with an argon content of less than 10 ppb.

In another aspect, the method disclosed in the present invention specifically comprises the following steps:
a) degassing desalinated water in a degasser to obtain desalinated and degassed water;
b) pressurizing the desalinated and degassed water with an electrolyzer feed water pump to obtain electrolyzer feed water, and passing this into an anode lye separator and a cathode lye separator, wherein a portion of lye in the separators is cooled in a lye cooler as a hot lye recirculation stream and then passed into an electrolytic cell in communication with a DC power supply;
   and c), further purifying O₂ separated out in the cathode lye separator and H₂ separated out in the anode lye separator to obtain a product.

Compared with the prior art, the technical solution provided in the present invention has the following advantages:
A simple, low-cost degasser is used to reduce the content of various gases, including argon, in the electrolyzer feed water, thereby reducing the content of these impurities in the O₂ and H₂ products resulting from electrolysis.

The hot lye recirculation stream passing through the lye heat exchanger is used to heat the degasser, thus further saving energy.

Since the gas impurities in the feed water of the electrolyzer have been removed in advance, the gases obtained at the two electrodes after electrolysis contains fewer types of impurities, so the subsequent purification process is simpler, and the purification equipment is cheaper.

### Brief Description of the Drawings

Further understanding of the advantages and spirit of the present invention can be gained through the following detailed description of the invention and the accompanying drawings.
Fig. 1 is a schematic diagram of the structure of a device for preparing high-purity hydrogen and/or oxygen by electrolysis of water, as provided by the present invention, wherein when point A and point B are directly connected, and point C and point D are directly connected, a configuration in the prior art is described.
Figure 2 is a schematic structural diagram of an embodiment of the present invention, in which a degasser for heating and degassing electrolyzer feed water is arranged between point A and point B.
Fig. 3 is a schematic structural diagram of another embodiment of the present invention, in which a lye heat exchanger is arranged between point C and point D, to transfer the heat of a hot lye recirculation stream to the degasser.

In the figure: 100 - electrolyzer; 1- alkaline electrolytic cell; 2 - cathode lye separator; 3 - anode lye separator; 4 - lye cooler; 5 - lye pump; 6 - desalination water treatment system; 7 - desalinated water storage tank; 8 - electrolyzer feed water pump; 10 - hot lye recirculation stream; 11 - cold lye recirculation stream; 12 - lye oxygen mixed stream; 13 - lye hydrogen mixed stream; 14 - hydrogen; 15 - oxygen; 20 - raw water; 21 - desalinated water; 22 - electrolyzer feed water; 30 - cooling water; 50 - degasser feed water pump; 51 - desalinated and degassed water heat exchanger; 52 - degasser; 53 - heater; 60 - cold desalinated input water; 61 - hot desalinated output water; 62 - gas discharge pipeline; 63 - hot desalinated and degassed water; 64 - cold desalinated and degassed water; 70 - lye heat exchanger; 71 - vacuum pump.

### Preferred Embodiments of the Invention

Specific embodiments of the present invention are explained in detail below in conjunction with the accompanying drawings. However, the present invention should be understood to not be limited to embodiments such as those described below, and the technical concept of the present invention may be implemented in combination with other well-known technologies or other technologies having the same function as those well-known technologies.

In the explanation of particular embodiments below, in order to clearly demonstrate the structure and manner of operation of the present invention, many directional words will be used for description, but words such as "front", "rear", "left", "right", "outer", "inner", "outward", "inward", "axial" and "radial" should be understood as being terms of convenience rather than defining words.

In the explanation of particular embodiments below, it must be understood that orientational or positional relationships indicated by terms such as "length", "width", "up", "down", "front", "rear", "left", "right", "vertical", "horizontal", "top", "bottom", "inner" and "outer" are based on the orientational or positional relationships shown in the drawings, and are merely intended to facilitate and simplify the description of the present invention, without indicating or implying that the apparatus or element referred to must have a specific orientation or be constructed and operated in a specific orientation, and therefore should not be understood as limiting the present invention.

The terms "upstream" and "downstream" indicate a relative positional relationship between a number of steps, devices or a number of device parts. In the present invention, a step that is performed first or a device that is used first according to the flow of a process is positioned upstream of a subsequent step or device.

In the present invention, unless otherwise clearly specified and defined, terms such as "installed", "connected together", "connected" and "fixed" should be understood in a broad sense, e.g. may mean connected in a fixed manner, but may also mean removably connected, or forming a single piece; may mean mechanically connected, but may also mean electrically connected; may mean directly connected together, but may also mean connected indirectly via an intermediate medium; and may mean internal communication between two elements, or an interactive relationship between two elements. Those skilled in the art can understand the specific meaning of the above terms in the present invention according to the specific circumstances.

Unless clearly indicated otherwise, each aspect or embodiment defined here can be combined with any other aspect(s) or embodiment(s). In particular, any preferred or advantageous feature indicated can be combined with any other preferred or advantageous feature indicated.

The electrolyzer is a device that is connected to a DC power supply and electrolyzes water to produce O₂ and H₂. Various electrolyzers, including alkaline electrolyzers, acidic electrolyzers, and proton exchange membrane electrolyzers, are suitable for use in the present invention. Taking an alkaline electrolyzer as an example, a 10% - 30% KOH aqueous solution is used as an electrolyte, and the following reactions occur:
At the cathode: 4OH⁻ → O₂ + 2H₂O + 4e⁻;
At the anode: 4H₂O + 4e⁻ → 4OH⁻ + 2H₂
Overall reaction: 2H₂O → 2H₂ + O₂

From a structural point of view, an alkaline electrolyzer comprises an electrolytic cell with electrodes inserted therein; gases generated near the two electrodes are passed separately into an anode lye separator and a cathode lye separator through pipelines. H₂ and O₂ leave from top ends of the separators separately and enter the next purification step; fresh electrolyzer feed water is added to the two separators separately, leaves from the bottom of the separators, is cooled by a lye cooler, and then flows back to the electrolytic cell.

The electrolyzer feed water is water for replenishment that is passed into the electrolyzer. In the prior art, desalinated water is generally used; in the present invention, desalinated water is further degassed in a degasser to obtain electrolyzer feed water.

The desalination water treatment system is a system that can remove strong electrolytes and/or some of the weak electrolytes in raw water, such as tap water. Generally, one of distillation, ion exchange and electrodialysis, etc. is used, or a combination of more than one of such methods is used. Desalinated water suitable for the semiconductor industry preferably has a resistance equal to or higher than 18MΩ·cm (25°C).

The working principle of the degasser is based on the fact that the solubility of gas in water decreases as the water temperature increases and approaches the saturation temperature. The structure of the degasser can take many forms; one of the more common forms is a column-like structure, with multiple plates contained in the column. The stream to be degassed is sprayed downward from the top of the column; washing water is heated to saturation temperature and fed into the column from the bottom thereof. The arrangement of the spraying and the plates can increase the contact area between the stream to be degassed and the washing water, thus increasing the efficiency of degassing. The stream to be degassed reaches saturation temperature through contact and heat exchange with the washing water, the gas dissolved therein is released and discharged from the degasser through a gas discharge port, and the degassed stream is converged and outputted at the bottom of the column. The degasser can effectively remove most of the gas dissolved in water, including O₂, N₂, CO₂ and Ar, etc., to reduce the contents thereof to the level of a few ppb.

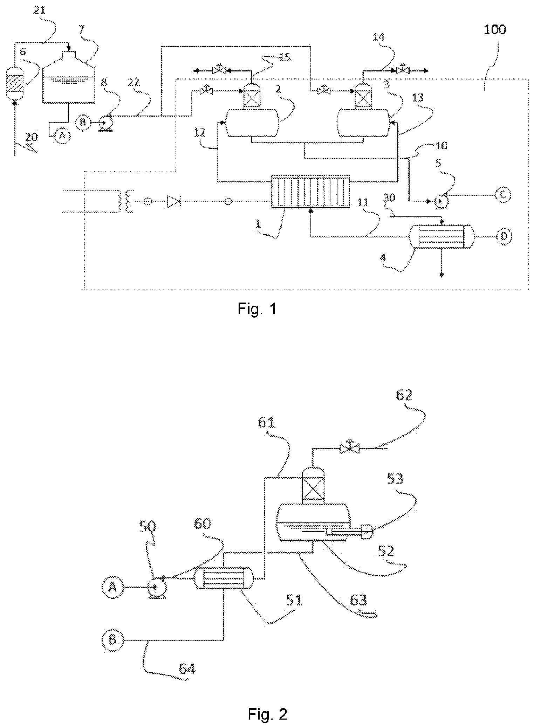

Particular embodiments of the present invention are explained in detail below in conjunction with Figs. 1 - 3.

Fig. 1 is a schematic diagram of the structure of a device for preparing high-purity hydrogen and/or oxygen by electrolysis of water, as provided by the present invention; it includes an electrolyzer 100 and an upstream device for processing raw water to generate electrolyzer feed water. When point A and point B are directly connected, and point C and point D are directly connected, an existing technique is described. In this existing technique, raw water 20 is desalinated by a desalination water treatment system 6 to produce desalinated water 21. Optionally, the desalinated water 21 is passed into a desalinated water storage tank 7, or is directly pressurized by an electrolyzer feed water pump 8 to become electrolyzer feed water 22. The electrolyzer feed water 22 is separately passed into a cathode lye separator 2 and an anode lye separator 3. The cathode lye separator 2 and the anode lye separator 3 receive a lye oxygen mixed stream 12 and a lye hydrogen mixed stream 13 respectively from an electrolytic cell 1. In each separator, the mixture of lye and gas is heated to separate the gas from the mixture. Oxygen 15 is discharged from the top of the cathode lye separator, and correspondingly, hydrogen 14 is discharged from the top of the anode lye separator. Some of the lye in the two separators is discharged from the bottom of the separators, and converges to form a hot lye recirculation stream 10 which, after being pressurized by a lye pump 5, is cooled by cooling water 30 in a lye cooler 4 to form a cold lye reflux stream 11 at about room temperature, which is then passed into the electrolytic cell 1.

Fig. 2 depicts an embodiment of the present invention, which differs from the existing technique shown in Fig. 1 in that degassing-related equipment is added between point A and point B. Specifically, after being pressurized by a degasser feed water pump 50, the desalinated water 21 is passed as cold desalinated input water 60 into a desalinated and degassed water heat exchanger 51, and heated to obtain hot desalinated output water 61, which stream 61 enters a degasser 52 through the top thereof. The degasser 52 has a heater 53; hot desalinated and degassed water 63 resulting from degassing is discharged from the bottom of the degasser 52, and released gas is discharged from the top through a gas discharge pipeline 62. The hot desalinated and degassed water 63 enters the desalinated and degassed water heat exchanger 51 as a hot medium, and becomes cold desalinated and degassed water 64 after being cooled through heat exchange. The stream 64 is pressurized by the electrolyzer feed water pump 8, becoming the electrolyzer feed water 22 to continue the subsequent process flow.

Since the electrolyzer feed water 22 in Figure 2 contains no salt and only an extremely small amount of gas (less than a few ppb by weight) after desalination and degassing, the composition of impurities in the O₂ and H₂ produced in the electrolytic cell is correspondingly simple, (the content of argon being less than 5ppb, and the content of carbon dioxide being almost zero), so further purification steps are simplified. For example, the gas products released at the two electrodes each contain a small amount of the other gas, which can be converted into water through a catalytic reaction, in which case the main by-product in the gas products is water. The water can be condensed and isolated by means of liquid nitrogen, and finally an adsorbent such as a molecular sieve can be used to remove residual water by adsorption.

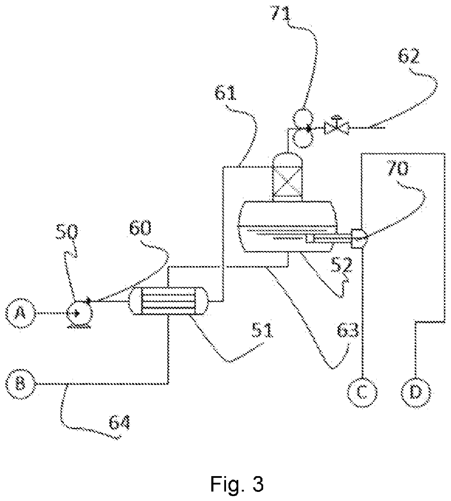

Figure 3 depicts another embodiment of the present invention. On the basis of Figure 2, i.e. with the degassing-related equipment having been added between point A and point B, a lye heat exchanger 70 is connected between point C and point D. After being pressurized by the lye pump 5, the hot lye recirculation stream 10 formed by convergence from the two lye separators is passed into the lye heat exchanger 70. One end of the lye heat exchanger 70 extends into the degasser 52, and uses the heat from the hot lye recirculation stream 10 to heat the washing water at the bottom of the degasser; after undergoing heat exchange, the hot lye recirculation stream 10 passes through the lye cooler 4 for further cooling, and then flows back into the electrolytic cell 1. Using the energy of the hot lye recirculation stream to heat the degasser reduces the demand for external energy, and improves the energy utilization efficiency.

Unless stated otherwise, qualifiers similar to "first" and "second" appearing herein do not indicate a definition of chronological order, quantity or importance, but are merely intended to distinguish one technical feature in this technical solution from another technical feature. Similarly, qualifiers similar to "a" appearing herein do not indicate a definition of quantity, but describe a technical feature that has not appeared in the preceding text. Similarly, modifiers similar to "about" and "approximately" appearing in front of numerals herein generally include the number itself, and the specific meaning thereof should be understood in conjunction with the meaning of the context. Similarly, unless modified by a specific quantity measure word, nouns herein should be regarded as including both singular and plural forms, i.e. the technical solution may include a single one of the technical feature concerned, but may also include a plurality of the technical feature.

The above are merely preferred particular embodiments of the present invention, which are merely intended to illustrate the technical solution of the present invention without limiting the present invention. All technical solutions obtainable by those skilled in the art according to the concept of the present invention by logical analysis, reasoning or limited experiment should be included in the scope of the present invention.

Although the content of the present invention has been described in detail by means of the preferred embodiments above, it should be understood that the above description should not be construed as limiting the present invention. Various amendments and substitutions to the present invention will be apparent after perusal of the above content by those skilled in the art. Thus, the scope of protection of the present invention should be defined by the attached claims.

## Claims

1. A device for preparing high-purity hydrogen and/or oxygen by electrolysis of water, **characterized in that** the device comprises an electrolyzer, and a degasser for degassing desalinated water, which is located upstream of the electrolyzer.

2. The device as claimed in claim 1, **characterized in that** the device further comprises a desalination water treatment system located upstream of the degasser.

3. The device as claimed in claim 1, **characterized in that** the electrolyzer comprises an alkaline electrolyzer.

4. The device as claimed in claim 3, **characterized in that** the electrolyzer further comprises a lye heat exchanger, and heat required by the degasser is supplied by a hot lye recirculation stream passing through the lye heat exchanger.

5. A device for preparing high-purity hydrogen and/or oxygen by electrolysis of water, **characterized in that** the device comprises, connected in sequence, a desalination water treatment system, optionally a desalinated water storage tank, a degasser feed water pump, a desalinated and degassed water heat exchanger, a degasser for degassing desalinated water, an electrolyzer feed water pump and an electrolyzer.

6. The device as claimed in claim 5, **characterized in that** the electrolyzer is an alkaline electrolyzer, and comprises an electrolytic cell, an anode lye separator, a cathode lye separator and a lye cooler.

7. The device as claimed in claim 6, **characterized in that** the electrolyzer further comprises a lye heat exchanger, and a hot lye recirculation stream flowing therethrough supplies required heat to the degasser.

8. The device as claimed in claims 1 - 7, **characterized in that** the desalinated water has an argon content of less than 10 ppb, by weight proportion, after being degassed by the degasser.

9. The device as claimed in claims 1 - 8, **characterized in that** the high-purity hydrogen and/or oxygen produced has an argon content of less than 5 ppb, by weight proportion.

10. The device as claimed in claims 1 - 9, **characterized in that** the device further comprises equipment for further purification of the hydrogen and/or oxygen produced in the electrolyzer.

11. A method for preparing high-purity hydrogen and/or oxygen by electrolysis of water, **characterized in that** the method comprises a step of degassing desalinated water in a degasser, to obtain electrolyzer feed water with an argon content of less than 10 ppb by weight proportion.

12. A method for preparing high-purity hydrogen and/or oxygen by electrolysis of water, **characterized in that** the method comprises the following steps:
a) degassing desalinated water in a degasser to obtain desalinated and degassed water;
b) pressurizing the desalinated and degassed water with an electrolyzer feed water pump to obtain electrolyzer feed water, and separately passing this into an anode lye separator and a cathode lye separator, wherein a portion of lye in the separators is cooled in a lye cooler as a hot lye recirculation stream and then passed into an electrolytic cell in communication with a DC power supply;
and c), further purifying O₂ separated out in the cathode lye separator and H₂ separated out in the anode lye separator to obtain a product.
